# FASCICULE DE BREVET EUROPEEN

(11) **EP 2 289 774 B1**
(45) Date de publication et mention de la délivrance du brevet: **19.09.2012**
(21) Numéro de dépôt: 10173123.0
(22) Date de dépôt: 17.08.2010
(51) Int. Cl.: B62D 53/04, B62D 53/06

(54) **Dispositif de guidage axial permettant d'éviter la mise en portefeuille destiné à un ensemble routier comprenant un véhicule tracteur et une remorque à timon coulissant**
Knickbewegung vermeidende axiale Führungsvorrichtung für ein Strassenzug, der eine Zugmaschine und einen mit verschiebarer Deichsel ausgestatteten Anhänger aufweist
Anti-knifing axial guiding device for a road train comprising a tractor vehicle and a trailer having a sliding drawbar

(30) Priorité: 27.08.2009 FR 0955858
(43) Date de publication de la demande: 02.03.2011
(73) Titulaire: LG Développement, 56150 Baud (FR)
(72) Inventeur: Le Goff, Jean-Philippe, 56150 Baud (FR)
(74) Mandataire: Hays, Bertrand

(56) Documents cités:
- EP-A1- 1 598 262
- EP-A1- 2 151 373
- US-A- 4 049 289

## Description

La présente invention concerne un ensemble routier comprenant un véhicule tracteur et une remorque à timon coulissant, ainsi qu'un dispositif à guidage axial particulier entre le véhicule tracteur et la remorque.

Il est connu, notamment dans le document brevet EP 1 598 262, un ensemble routier comprenant
- un véhicule tracteur comprenant un châssis sur lequel sont montés au moins un essieu avant et un essieu arrière,
- une remorque ou semi-remorque comprenant un châssis sur lequel sont montées au moins au moins deux roues,
- un dispositif d'attelage comprenant des moyens d'accrochage montés sur le châssis du véhicule tracteur, en avant de son essieu arrière, aptes à coopérer avec des moyens d'accrochage complémentaires de la remorque pour accrocher la remorque au véhicule tracteur dans une position dite accrochée de la remorque, et
- un dispositif dit de guidage axial comprenant des premiers moyens de guidage axial montés sur le véhicule tracteur, aptes à coopérer dans la position accrochée de la remorque, avec des seconds moyens de guidage montés sur la remorque pour maintenir l'axe longitudinal médian de la remorque sensiblement dans le plan longitudinal vertical du véhicule tracteur lors de la conduite sur route.

Cette nouvelle génération de remorques routières à guidage axial apparue récemment sur le marché offre de nombreux avantages aux utilisateurs tels que compacité, maniabilité, tenue de route, et charge utile supérieure pour un encombrement équivalent à un véhicule classique. La principale difficulté pour la réalisation de ce type de remorque est la réalisation et l'implantation du dispositif de guidage axial qui a pour fonction le maintien de l'axe longitudinal de la remorque sensiblement dans le même plan vertical que l'axe longitudinal du véhicule tracteur.

Dans les ensembles routiers proposés à ce jour, notamment dans le document brevet cité ci-dessus, le dispositif de guidage axial forme un ensemble placé entre le véhicule tracteur et sa remorque ou semi-remorque, en position centrale et plus particulièrement entre les longerons du châssis auxquels il est solidarisé ou articulé. Cette disposition a plusieurs inconvénients tels que celui de rendre le véhicule non conforme au code de la route lorsqu'il est dételé du fait de l'absence de pare-choc ou de barre anti-encastrement, l'absence de feux arrière, ou l'existence à l'arrière du véhicule de pièces mécaniques de guidage proéminentes, et donc dangereuses, non compatibles avec la sécurité routière. D'autres inconvénients tels que la complexité de construction ou le coût de réalisation ainsi que la spécificité du dispositif de guidage axial pour chaque modèle de véhicule font que ce type de véhicules ne connaît à ce jour qu'une diffusion très limitée.

Le but de la présente invention est de proposer un ensemble routier avec un dispositif de guidage axial palliant au moins l'un des inconvénients précités, notamment qui libère la partie centrale des véhicules située entre les longerons de leur châssis, et qui soit suffisamment simple de conception et de mise en oeuvre pour une fabrication en série.

A cet effet, la présente invention a pour objet un ensemble routier comprenant
- un véhicule tracteur comprenant un châssis sur lequel sont montés au moins un essieu avant portant des roues avant et un essieu arrière portant des roues arrière,
- une remorque comprenant un châssis sur lequel sont montées au moins deux roues,
- un dispositif d'attelage comprenant des moyens d'accrochage montés sur le châssis du véhicule tracteur, en avant de l'essieu arrière, aptes à coopérer avec des moyens d'accrochage complémentaires de la remorque pour accrocher la remorque au véhicule tracteur dans une position dite accrochée de la remorque de sorte que la remorque soit articulée sur le véhicule tracteur au moins autour d'un axe transversal de tangage sensiblement horizontal situé en avant de l'essieu arrière du véhicule tracteur, et,
- un dispositif dit de guidage axial, comprenant des premiers moyens de guidage montés sur le véhicule tracteur aptes à coopérer dans la position accrochée de la remorque avec des seconds moyens de guidage montés sur la remorque, pour maintenir l'axe longitudinal médian de la remorque sensiblement dans le plan longitudinal vertical du véhicule tracteur lors de la conduite sur route, ledit axe longitudinal médian de la remorque passant par ledit axe transversal de tangage, et permettant ainsi de guider le pivotement de la remorque autour dudit axe transversal,
   **caractérisé en ce que**
- la remorque comprend au moins un timon coulissant à freinage par inertie, associé à un dispositif de freinage par inertie, ledit timon coulissant comportant une partie fixe montée de manière fixe à l'avant du châssis et une partie mobile montée dans la partie fixe de manière coulissante, et munie à son extrémité libre avant desdits moyens d'accrochage complémentaires, ledit dispositif de guidage autorisant les mouvements longitudinaux relatifs du freinage,
- lesdits premiers moyens de guidage comprenant deux premiers éléments de guidage, de préférence identiques, montés symétriquement sur le châssis du véhicule tracteur, de part et d'autre de son plan longitudinal vertical, en arrière de son essieu arrière et de chaque côté extérieur dudit châssis,
- lesdits seconds moyens de guidage comprenant deux seconds éléments de guidage, de préférence identiques, montés symétriquement sur le châssis de la remorque, de part et d'autre de son plan longitudinal vertical et en vis-à-vis,
- chaque second élément de guidage étant apte à venir sensiblement en contact par une surface active de contact avec une surface active de contact d'un premier élément de guidage dans un plan de contact sensiblement vertical qui est extérieur au châssis du véhicule tracteur et intérieur au châssis de la remorque.

Selon l'invention, la remorque comprend un timon d'attelage dit coulissant, à freinage par inertie, fixé à l'avant du châssis de la remorque, et positionné pour s'accrocher via ses moyens d'accrochage aux moyens d'accrochage fixés sur le châssis du véhicule tracteur, en avant de son essieu arrière. De manière connue, un tel timon coulissant à freinage par inertie est associé à un dispositif de freinage par inertie comprenant des moyens de freinage disposés au niveau des roues de la remorque et commandés par le déplacement de la partie mobile du timon coulissant via un système de transmission composé par exemple de tringles, câbles ou d'un circuit hydraulique. Un tel timon coulissant permet la réalisation de remorques routières de construction économique jusqu'à un poids total autorisé en charge (PTAC) de 3,5T.

Par ailleurs, selon l'invention, le dispositif de guidage axial est constitué non pas d'un ensemble central unique mais de deux ensembles symétriques indépendants droite et gauche composés chacun d'un premier élément de guidage sur le châssis du véhicule tracteur et d'un second élément de guidage sur le châssis de la remorque, lesdits premiers et seconds éléments de guidage étant aptes à coopérer dans des plans verticaux positionnés à l'extérieur du châssis du véhicule tracteur et à l'intérieur du châssis de la remorque. Les premiers éléments de guidage sont solidaires des côtés extérieurs de l'arrière du châssis du véhicule tracteur, en arrière de l'essieu arrière, et les seconds éléments de guidage sont solidaires du châssis de la remorque et fixés face à face à l'intérieur du châssis de la remorque en correspondance des premiers éléments de guidage lorsque la remorque est en position accrochée au véhicule tracteur. Les premiers et les seconds éléments de guidage, de formes complémentaires, aptes à collaborer par appui de leurs surfaces actives de contact, sont réglés à l'arrêt, sensiblement en contact l'un contre l'autre.

Lors de l'utilisation sur route de l'ensemble routier, les seconds éléments de guidage solidaires du châssis de la remorque peuvent s'appuyer soit à droite, soit à gauche sur les premiers éléments de guidage complémentaires solidaires du véhicule tracteur. Tout mouvement latéral relatif de la remorque par rapport à son véhicule tracteur est supprimé. Les premiers et seconds éléments de guidage laissent libres les mouvements relatifs de tangage de la remorque par rapport à son véhicule tracteur, et les mouvements relatifs verticaux de suspension et longitudinaux du freinage, et peuvent laisser libres ou non les mouvements relatifs de roulis de la remorque par rapport à son véhicule tracteur.

Les avantages de ce nouveau dispositif de guidage axial sont multiples. L'arrière du véhicule tracteur n'étant pas modifié, il conserve la partie centrale de ses équipements routiers d'origine dont certains obligatoires tels que barre anti-encastrement, pare-choc, crochet ou boule d'attelage. Equipée de ce dispositif, une remorque à guidage axial pourra s'atteler indifféremment à plusieurs types ou modèles de véhicules tracteurs différents simplement équipés d'un kit d'attelage comprenant lesdits moyens d'accrochage et d'un kit de guidage axial comprenant lesdits premiers moyens de guidage. Le coût de réalisation de ce dispositif de guidage selon l'invention s'avère par ailleurs beaucoup moins onéreux que ceux existants à ce jour.

Selon une particularité, dans la position accrochée de la remorque, lesdits premiers moyens de guidage et lesdits seconds moyens de guidage sont disposés sensiblement au niveau des axes des roues de la remorque. Par « sensiblement au niveau des axes des roues », on entend au niveau des axes des roues, ainsi que légèrement en avant et légèrement en arrière desdits axes des roues. Lorsque la remorque comprend plusieurs paires de roues, lesdits moyens de guidage sont disposés sensiblement au niveau des axes des roues positionnées le plus en avant de la remorque.

Selon un mode de réalisation, le châssis du véhicule tracteur comprend deux longerons sur lesquels sont montés l'essieu arrière portant des roues arrière, lesdits longerons présentant des parties arrière s'étendant en arrière des roues arrière, sur le côté extérieur desquelles sont disposés lesdits premiers éléments de guidage, lesdits premiers et seconds éléments de guidage étant disposés sensiblement à hauteur de la partie arrière des longerons du châssis du véhicule tracteur dans la position accrochée de la remorque.

Selon une particularité, chaque premier élément de guidage et chaque second élément de guidage présente au moins une surface active sensiblement plane ou cylindrique, fixe ou mobile par rapport au châssis sur lequel l'élément est monté. De façon privilégiée, ces surfaces actives de contact sont soit planes, soit de forme cylindrique. Elles sont soit fixes soit mobiles par rapport à leur support constitué par le véhicule tracteur ou la remorque. Pour chacun des premiers et seconds éléments de guidage, les surfaces actives de contact peuvent être uniques ou multiples afin de diminuer les contraintes ponctuelles subies par le dispositif ou d'en diminuer l'encombrement.

Selon une particularité, lesdits premiers éléments de guidage et lesdits seconds éléments de guidage présentent chacun au moins une surface active de contact choisie parmi
- une surface active plane fixe,
- une surface active plane qui est
- mobile dans son plan, en translation verticale et/ou horizontale, sensiblement parallèlement aux plans longitudinaux verticaux de la remorque et du véhicule tracteur, et/ou
- inclinable autour d'un axe de pivotement sensiblement parallèle à l'axe de roulis de la remorque et du véhicule tracteur, ledit axe de pivotement étant de préférence horizontal ; ou inclinable autour d'un point par l'action d'une liaison de type rotule, et/ou
- pivotante autour d'un axe de pivotement sensiblement perpendiculaire aux plans longitudinaux verticaux de la remorque et du véhicule tracteur,
- une surface active fixe cylindrique, dite en portion de cylindre, dont l'axe est de préférence dans le plan longitudinal vertical de la remorque ou du véhicule tracteur,
- une surface active cylindrique mobile en rotation autour d'un axe sensiblement vertical ou horizontal, sensiblement parallèle aux plans longitudinaux verticaux de la remorque et du véhicule tracteur, et
- une surface active cylindrique mobile en rotation autour d'un premier axe sensiblement vertical ou horizontal, et sensiblement parallèle aux plans longitudinaux verticaux de la remorque et du véhicule tracteur, et qui est
- mobile en translation sensiblement horizontale ou verticale, et sensiblement parallèlement aux plans longitudinaux verticaux de la remorque et du véhicule tracteur, et/ou
- inclinable autour d'un second axe perpendiculaire au premier axe et parallèle à l'axe de roulis de la remorque par rapport au véhicule tracteur, et/ou
- pivotante autour d'un troisième axe de pivotement sensiblement perpendiculaire aux plans longitudinaux verticaux de la remorque et du véhicule tracteur.

Selon un mode de réalisation, le châssis de la remorque comprend deux longerons supports latéraux munis, de leur côté intérieur et en vis-à-vis, desdits seconds éléments de guidage.

Selon un mode de réalisation, des premiers objets parmi lesdits premiers et seconds éléments de guidage comprennent des parois sensiblement verticales présentant des surfaces actives planes fixes, les autres objets comprenant chacun au moins un patin dont la surface active est sensiblement verticale.

Avantageusement, lesdits patins sont montés sur le châssis de la remorque ou le châssis du véhicule tracteur inclinables autour d'un axe de pivotement parallèle à l'axe de roulis de la remorque, ou autour d'un point par l'intermédiaire d'une liaison rotule, afin de permettre les mouvements de roulis de la remorque tout en maintenant les surfaces actives des premiers et seconds éléments sensiblement en contact.

Selon un mode de réalisation, des premiers objets parmi lesdits premiers et seconds éléments de guidage comprennent des parois sensiblement verticales présentant des surfaces actives planes, fixes ou non, les autres objets comprenant chacun au moins un galet ou rouleau dont l'axe de rotation est disposé soit horizontalement soit verticalement, sensiblement parallèlement aux plans longitudinaux verticaux de la remorque et du véhicule tracteur, les galets sont chacun montés soit sur une partie latérale arrière extérieure du châssis du véhicule tracteur soit sur une partie latérale intérieure du châssis de la remorque. L'action de chaque galet rotatif permet de limiter le frottement des surfaces actives et d'éviter ainsi leur usure, particulièrement de la surface active plane verticale dudit premier ou second élément.

Selon un mode de réalisation
- chaque galet rotatif autour de son axe de symétrie est monté sur le châssis de la remorque ou sur le châssis du véhicule
   - mobile en translation verticale et/ou horizontale et/ou
   - inclinable autour d'un axe de pivotement perpendiculaire à son axe de rotation, et/ou
   - pivotant autour d'un axe perpendiculaire aux plans longitudinaux verticaux de la remorque et du véhicule tracteur
- et/ou lesdites parois verticales sont montées
   - mobiles en translation verticale et/ou horizontale
   - et/ou pivotantes autour d'un axe perpendiculaire aux plans longitudinaux verticaux de la remorque et du véhicule tracteur,
afin d'obtenir des déplacements simultanés sensiblement sans frottement desdits premiers éléments par rapport auxdits seconds éléments, dans le sens horizontal et dans le sens vertical.

Avantageusement, lesdits premiers éléments de guidage et/ou lesdits seconds éléments de guidage montés inclinables, mobiles en translation verticale et/ou horizontale, et/ou pivotantes, sont sollicités élastiquement vers une position neutre par des dispositifs élastiques afin de maintenir les surfaces actives en contact permanent pendant les mouvements de roulis de la remorque par rapport au véhicule tracteur.

Selon un mode de réalisation, ledit châssis de la remorque comprend une partie dite centrale portant de chaque côté un support de roue vertical, chaque support de roue vertical portant latéralement, du côté extérieur, de manière rotative, au moins une roue, ladite partie centrale étant disposée dans la position accrochée de la remorque au-dessus du châssis du véhicule tracteur, avec chaque support de roue vertical disposé du côté extérieur du châssis du véhicule tracteur, juste en arrière d'une roue de son essieu arrière. Dans ce mode de réalisation, la partie centrale et ses supports de roue verticaux viennent à cheval sur la partie arrière du châssis du véhicule tracteur de manière à positionner longitudinalement un support de roue vertical dans l'espace qui reste disponible du côté extérieur du châssis entre celui-ci et la roue de la remorque juste en arrière de la roue la plus extérieure de l'essieu arrière du véhicule tracteur. Cette structure de châssis selon l'invention permet ainsi de positionner les roues de la remorque au plus près des roues arrière du véhicule tracteur, et donc de limiter l'effet de ripage des roues dans les virages.

Selon un mode de réalisation, ladite partie centrale du châssis est formée d'au moins une traverse dite avant et des deux supports de roue verticaux montés aux extrémités de ladite traverse avant, la traverse avant étant disposée dans la position accrochée de la remorque au-dessus du châssis du véhicule tracteur. De préférence, le châssis de la remorque comprend en outre au moins un longeron monté sur la traverse avant et portant ladite partie fixe du timon coulissant. Dans ce mode de réalisation, les supports de roue verticaux sont des parties rigides constitutives du châssis de la remorque, chaque roue de la remorque pouvant être montée sur un support de roue via un système de suspension. Selon un mode de réalisation, lesdits supports de roue verticaux sont formés par lesdits longerons supports latéraux présentant sur leur côté intérieur lesdits seconds éléments de guidage, ladite partie centrale comprenant de préférence en outre une traverse arrière, chaque support de roue est formé d'un longeron support monté entre ladite traverse avant et ladite traverse arrière, les axes des roues de la remorque étant disposés entre la traverse avant et la traverse arrière. Chaque roue est avantageusement montée sur un support de roue vertical au moyen d'un bras oscillant, de type tiré ou poussé, monté pivotant en partie inférieure du support de roue vertical autour d'un axe de pivotement transversal. Ladite remorque comprend de préférence un système de suspension comprenant lesdits bras oscillant reliés par des biellettes à un dispositif élastique déporté en arrière du châssis de la remorque chaque biellette étant montée pivotante par une première extrémité à l'extrémité d'un bras solidaire en rotation d'un bras oscillant portant la roue et par une deuxième extrémité à l'extrémité d'un bras du dispositif élastique sollicité élastiquement vers une position de repos.

Selon un autre mode de réalisation, lesdits supports de roue verticaux sont formés par les lames de suspension longitudinales d'un système de suspension, chaque roue est montée à l'extrémité d'un essieu transversal rigide relié aux lames de suspension longitudinales, le corps central dudit essieu transversal étant disposé sous le châssis du véhicule tracteur dans la position accrochée de la remorque. Chaque support de roue vertical peut comprendre au moins une lame de suspension fixée par ses extrémités à un longeron de la partie centrale du châssis de la remorque, le corps central de l'essieu transversal portant à chaque extrémité un bras d'essieu sur lequel est monté une roue et par lequel l'essieu transversal est monté à la partie centrale des lames de suspension. En variante, chaque support de roue vertical comprend au moins une lame de suspension fixée par sa partie centrale à un longeron de la partie centrale du châssis de la remorque, les extrémités avant et arrière des lames de suspension portent des essieux transversaux tandem de type bogie, l'essieu transversal de la remorque le plus en avant venant sous le châssis du véhicule tracteur en position accrochée de la remorque.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue de dessus d'un ensemble routier selon l'invention, comprenant une remorque en position accrochée à cheval sur un véhicule tracteur à l'arrêt ou en conduite sur route ;
- la figure 2 est une vue de dessus analogue à la figure 1, en phase de freinage ;
- la figure 3 est une vue schématique en coupe selon le plan longitudinal vertical du véhicule tracteur de l'ensemble routier de la figure 1 illustrant les débattements verticaux et longitudinaux de la remorque équipée d'une carrosserie ;
- les figures 4, 5 et 6 sont des vues schématiques en coupe selon un plan vertical perpendiculaire à l'axe longitudinal de l'ensemble routier de la figure 1, illustrant notamment les débattements verticaux de suspension du châssis de la remorque par rapport au châssis du véhicule tracteur ;
- la figure 7 est une vue en perspective d'un premier élément de guidage axial selon une première variante de réalisation ;
- la figure 8 est une vue arrière d'un ensemble routier illustrant les mouvements de roulis de la remorque par rapport au véhicule tracteur équipé de premiers éléments de guidage selon la figure 7, les seconds éléments équipant la remorque étant constitués par des parois verticales de guidage ;
- les figures 9 et 10 sont respectivement une vue en perspective et une vue en coupe d'un premier élément de guidage axial selon une deuxième variante de réalisation ;
- la figure 11 est une vue en perspective d'un premier élément de guidage axial selon une troisième variante de réalisation ;
- la figure 12 est une vue arrière d'un ensemble routier analogue à celle de la figure 8, le véhicule tracteur étant équipé de premiers éléments de guidage selon la figure 11, les seconds éléments équipant la remorque étant constitués par des parois verticales de guidage ;
- la figure 13 est une vue en perspective d'un premier élément de guidage axial selon une quatrième variante de réalisation ;
- la figure 14 est une vue arrière d'un ensemble routier analogue à celle des figures 8 et 12, le véhicule tracteur étant équipé de premiers éléments de guidage selon la figure 13, les seconds éléments équipant la remorque étant constitués par des parois verticales de guidage ;
- la figure 15 est une vue en perspective d'un premier élément de guidage et d'un second élément de guidage selon une cinquième variante de réalisation ;
- la figure 16 est une vue en perspective d'un premier élément de guidage et d'un second élément de guidage selon une sixième variante de réalisation ; et,
- la figure 17 est une vue en perspective d'un premier élément de guidage et d'un second élément de guidage selon une septième variante de réalisation.

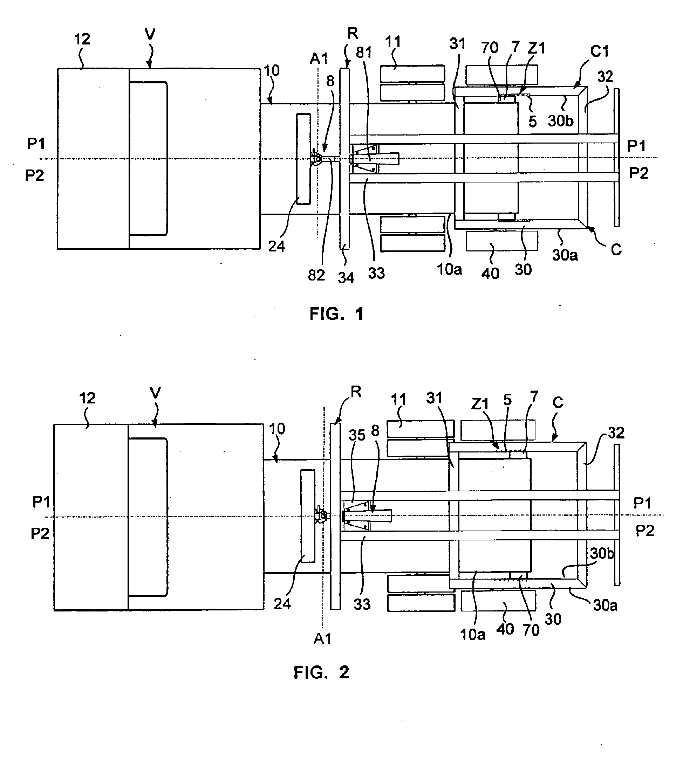

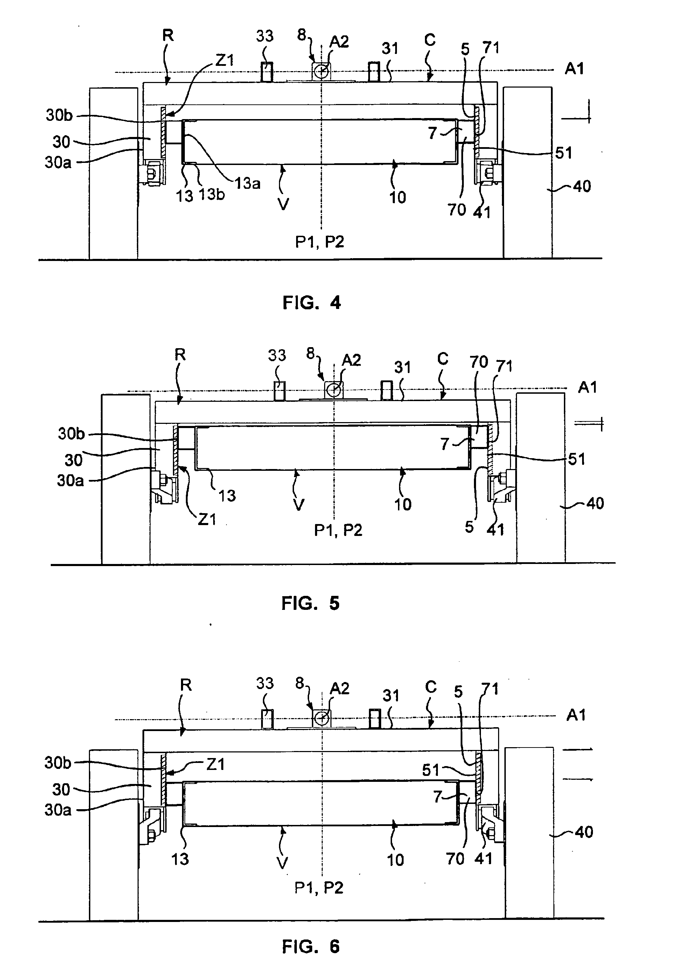

Les figures 1 à 2 en vue de dessus, 3 en coupe longitudinale et 4 en coupe transversale verticale sensiblement en arrière de l'axe des roues de la remorque, illustrent un ensemble routier selon l'invention comprenant un véhicule tracteur V, de type véhicule utilitaire, et une remorque R. Le véhicule tracteur V comprend un châssis représenté schématiquement sous la référence 10, un essieu directionnel avant et un essieu arrière portant des roues arrière 11, l'essieu arrière étant par exemple de type rigide, propulseur ou non, suspendu sous des lames de ressort latérales et connu en soi. Le châssis porte en partie avant une cabine 12 et le système de motorisation du véhicule. Le châssis 10 présente un plan longitudinal de symétrie vertical P1 et est formé par exemple de deux longerons 13, représentés schématiquement sur la figure 4, reliés parallèlement entre eux par plusieurs traverses (non représentées). Chaque longeron a une section transversale en U couché, avec un flanc 13a disposé verticalement et des ailes 13b horizontales orientées vers l'intérieur. Chaque longeron peut également être de type caisson creux de section sensiblement rectangulaire. Il possède dans ce cas un côté extérieur vertical et deux côtés, supérieur et inférieur, horizontaux. Le châssis présente une partie dite arrière 10a qui s'étend en arrière des roues arrière 11.

Selon un mode de réalisation, la remorque R selon l'invention comprend un châssis C comportant une partie dite centrale C1 (Fig.1), portant les roues 40, constituée principalement de deux longerons supports 30 latéraux reliés entre eux par une traverse avant 31 et une traverse arrière 32. Lesdits longerons latéraux supports sont de type tubulaire à section transversale rectangulaire, formé de deux parois latérales verticales, dite extérieure 30a et intérieure 30b, rigides reliées entre elles par une paroi supérieure et une paroi inférieure et/ou une paroi avant et une paroi arrière.

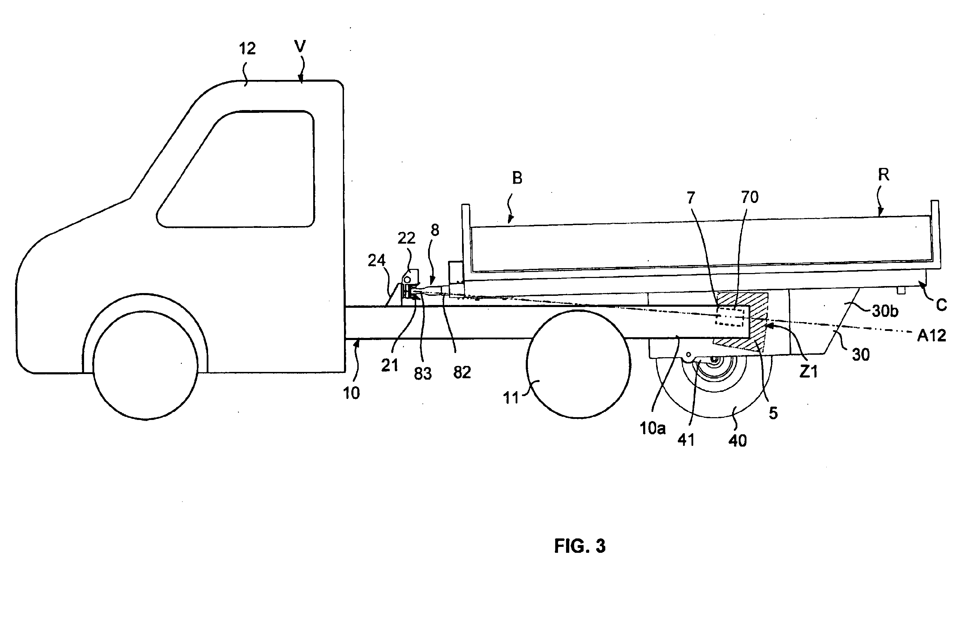

Selon un mode de réalisation, chaque roue 40 est montée sur un longeron latéral support au moyen d'un bras oscillant 41 (Fig. 3, 4, 5, 6) ou bras de suspension, monté pivotant par une extrémité sous la paroi inférieure du longeron, autour d'un axe horizontal, et portant à son autre extrémité le moyeu d'une roue. Les bras oscillants sont incurvés vers l'extérieur de manière à porter le moyeu et sa roue du côté extérieur de la paroi latérale extérieure 30a. Les bras oscillants 41 sont de type tirés, ils s'étendent vers l'arrière depuis leur axe de rotation. Selon un autre mode de réalisation, les bras oscillants peuvent être de type poussé, non représentés ici, et s'étendre vers l'avant depuis leur axe de rotation.

Selon un autre mode de réalisation non représenté, chaque roue est montée à l'extrémité d'un essieu rigide transversal dont l'axe du corps central est situé plus bas que l'axe des roues. L'essieu est relié au châssis par des lames de ressort longitudinales fixées aux longerons latéraux supports. Chaque lame de ressort peut être fixée à l'essieu par sa partie centrale ou à ses extrémités dans le cas par exemple d'essieux tandem de type bogie.

Le châssis de la remorque comprend en outre une paire de longerons 33 fixés sur la traverse avant 31 et la traverse arrière 32, symétriquement de part et d'autre du plan longitudinal vertical P2 de la remorque. Ces longerons s'étendent en avant de la partie centrale et portent à leur extrémité avant un timon d'attelage de type coulissant 8.

Le châssis C peut être équipé de différents types de carrosserie, par exemple d'une benne B, basculante ou non basculante, tel qu'illustré sur la figure 3.

L'axe du timon coulissant 8 est disposé dans le plan longitudinal vertical P2 de la remorque. En référence à la figure 1, le timon coulissant, connu en soi, comprend une première partie fixe 81 solidaire du châssis de la remorque à l'avant de celui-ci, et une partie mobile 82 destinée à être accrochée à un véhicule tracteur pour l'utilisation de la remorque. La partie fixe est formée d'un corps fixe tubulaire 81 qui est fixé sur une plaque inférieure 35 (Fig. 2) montée entre les deux parties d'extrémités avant des longerons 33. La partie mobile est formée d'une barre tubulaire mobile 82 qui est montée coulissante par une première extrémité dans le passage interne du corps fixe. Sa deuxième extrémité, dite extrémité libre, est équipée de moyens d'accrochage pour l'accrochage de la remorque à un véhicule tracteur, tel qu'un anneau d'accrochage 83 (Fig. 3). La barre mobile est disposée sous une traverse support avant 34 fixée rigidement sur le dessus de la partie avant des longerons 33, de sorte que son anneau d'accrochage reste en avant de ladite traverse dans la position rétractée de la barre mobile. De manière connue, la barre mobile est munie de moyens de retenue coopérant avec des moyens de retenue complémentaires du corps fixe pour retenir la barre mobile dans le corps fixe, ces moyens de retenue (non représentés) définissent une position déployée maximale de la barre mobile, dans laquelle la barre mobile est avantageusement sollicitée élastiquement par des moyens de rappel élastique appropriés. La remorque est équipée d'un dispositif de freinage par inertie commandé par l'inertie de la remorque, à savoir par le rapprochement de la remorque et du véhicule tracteur. Le déplacement de la barre mobile commande via un système de transmission, par exemple de type tringlerie et câbles ou hydraulique, l'activation de moyens de freinage disposés au niveau des roues.

Pour l'attelage de la remorque, le châssis du véhicule tracteur comprend des moyens d'accrochage formé ici d'une broche 21 montée sur une chape 22 et actionnable par un levier. La chape 22 est montée de manière réglable en hauteur sur une traverse support 24 fixée par des moyens de fixation sur les longerons 13 du châssis 10 du véhicule tracteur.

L'ensemble routier comprend en outre un dispositif de guidage axial pour maintenir l'axe longitudinal médian A2 (Fig. 4, 5, 6, 8, 12, 14) de la remorque sensiblement dans le plan longitudinal vertical du véhicule tracteur, cet axe longitudinal médian de la remorque passant sensiblement par le ledit axe transversal de tangage A1 (Fig.1).

En référence aux figures 1, 2, 3, 4, 5, 6, le dispositif comprend des premiers éléments de guidage 7 sur le châssis du véhicule tracteur aptes à coopérer avec des seconds éléments de guidage 5 sur le châssis de la remorque.

Dans les modes de réalisation représentés figures 1, 2, 3, 4, 5, 6, 8, 12 et 14, les seconds éléments de guidage sont formés par des parois de guidage 5, constituées par les parois latérales verticales intérieures 30b des longerons supports, présentant chacune une surface active de contact 51 plane, parallèle au plan longitudinal de la remorque P2, et à son axe de roulis A12 (Fig 3). En variante, les parois de guidage sont constituées par des plaques fixées rigidement sur les longerons supports.

Les premiers éléments de guidage 7 sont formés ici par des patins de guidage 70 fixés latéralement sur la partie arrière 10a du châssis du véhicule tracteur, plus particulièrement sur le côté extérieur des flancs 13a des longerons, tel qu'illustré à la figure 4. Chaque patin présente une surface active plane fixe 71 verticale, parallèle au plan longitudinal P1, qui agit par contact sur la surface active plane fixe 51 (Fig.4, 5 et 6).

En position accrochée, tel qu'illustré aux figures 1 à 6, la partie centrale C1 du châssis C de la remorque vient à cheval sur la partie arrière 10a du châssis du véhicule tracteur, sans contact avec ce dernier autre que ceux des éléments de guidage. La traverse avant 31 est disposée au-dessus du châssis 10, et les longerons supports 30 viennent se positionner de part et d'autre du châssis 10, le long des parties arrière 10a dudit châssis du véhicule tracteur, juste en arrière de ses roues arrière 11. Les patins viennent sensiblement en contact par leurs surfaces actives de contact 71 contre les surfaces actives de contact 51 des parois de guidage 5. Pendant la conduite sur route, les surfaces actives planes des patins 7 agissent alors directement par glissement sur les surfaces actives planes des parois de guidage 5. Chaque longeron latéral support 30, portant le dispositif de suspension, vient se positionner dans l'espace libre étroit existant juste en arrière de chaque roue arrière 11 du véhicule tracteur, le long de la partie arrière 10a du châssis, entre le premier élément de guidage lié au châssis du véhicule tracteur et la roue de la remorque. Les roues de la remorque sont sensiblement alignées avec les roues arrière extérieures du véhicule tracteur qui présentent la voie la plus importante et sont positionnées au plus près de ces dernières.

La zone hachurée, référencée Z1 sur les figures 1 à 6, illustre la zone de contact entre le patin et la paroi de guidage. En position accrochée sur route, la remorque est mobile longitudinalement par rapport au véhicule tracteur du fait de l'action du timon coulissant assurant le freinage et mobile verticalement du fait de l'action des suspensions, du véhicule tracteur et de la remorque, ainsi que des mouvements de roulis. La zone de contact Z1 s'étend sensiblement en avant, au niveau et/ou en arrière des axes des roues de la remorque. Elle est définie par la surface balayée par la surface active de chaque premier élément de guidage sur la surface active de chaque second élément de guidage. Elle peut être définie de la façon suivante.

La longueur de la surface active du second élément de guidage, en particulier d'une paroi de guidage 30b est au moins égale à la longueur de la surface active d'un premier élément de guidage, en particulier d'un patin 70, augmentée, vers l'arrière de la remorque, de la course maximale du timon coulissant assurant le freinage par inertie, tel que visible sur les figures 1 et 2 qui illustrent l'ensemble routier, respectivement en dehors d'une phase de freinage et pendant la phase de freinage.

La hauteur de la surface active du second élément de guidage, en particulier d'une paroi de guidage 30b, et mesurée verticalement est égale à la hauteur de la surface active du premier élément de guidage, en particulier d'un patin 70, augmentée
- vers le haut, de la course verticale d'écrasement des suspensions de la remorque jusqu'à leur butée basse, les suspensions du véhicule tracteur étant non comprimées, tel qu'illustré à la figure 5, et,
- vers le bas, de la course verticale d'écrasement des suspensions du véhicule tracteur jusqu'à leur butée basse, les suspensions de la remorque étant non comprimées, tel qu'illustré à la figure 6.

Les patins peuvent avoir, par exemple, une surface active de forme rectangulaire ou circulaire et d'une taille juste suffisante pour que la pression de contact consécutive aux efforts de guidage latéraux de la remorque sur le véhicule et réciproquement, soit inférieure à celle qui pourrait provoquer l'usure rapide ou la dégradation des matériaux utilisés. Les patins peuvent être réalisés soit en un matériau plastique résistant à l'usure et aux déformations soit en acier poli ou chromé afin d'offrir un très faible coefficient de frottement aux surfaces actives complémentaires ou recouvert d'une couche de matériau résistant à l'usure telle que, par exemple, une projection de céramique puis de polytétrafluoroéthylène.

Les parois de guidage sont de préférence réalisées en un acier dur, leur surface active pouvant être polie ou chromée ou pouvant recevoir un traitement de surface à bas coefficient de frottement tel qu'une projection de céramique recouverte de polytétrafluoroéthylène, ces traitements de surface ayant pour objectif de limiter l'usure.

Un graissage classique des surfaces en contact peut également être prévu comme le sont, à titre d'exemple, les sellettes des véhicules tracteurs de semi-remorques. Les moyens de guidage peuvent également être équipés d'un dispositif de protection contre les projections de poussières et salissures fixé sur la remorque et/ou sur le véhicule tracteur.

Pour faciliter le réglage du jeu latéral lors de la première installation ou pour compenser l'effet de l'usure, un dispositif de réglage de l'écartement des patins de guidage, par vis ou par cales de diverses épaisseurs non représentées, peut être utilement prévu au niveau de leur fixation ou par un dispositif excentrique agissant sur leur axe de basculement A3 lorsqu'ils en sont équipés.

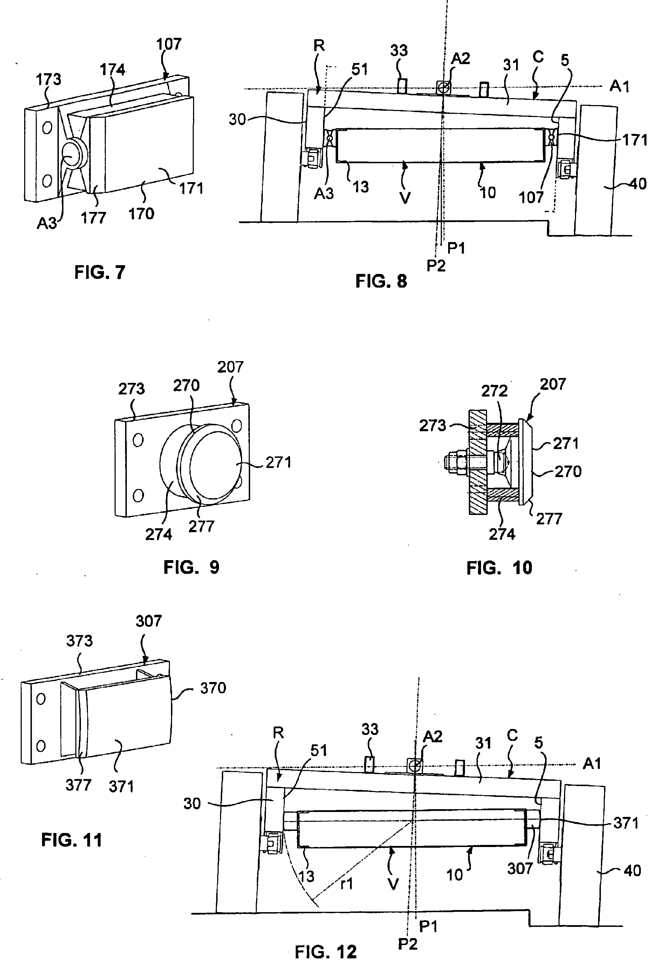

Dans une variante de réalisation illustrée aux figures 7 et 8, les premiers éléments de guidage 107 comprennent chacun un patin 170 monté inclinable ou pivotant autour d'un axe de pivotement A3 sur une embase de fixation 173 par laquelle ledit patin est fixé sur le châssis du véhicule tracteur. L'axe de pivotement est sensiblement parallèle à l'axe de roulis A12 (Fig 3) de la remorque. Le patin présente une surface active de contact 171 plane dotée, à sa bordure arrière, d'un chanfrein 177 facilitant l'engagement du second élément de guidage lors de la manoeuvre d'accrochage de la remorque au véhicule. Le patin 170 est sollicité élastiquement vers une position neutre sous l'action d'un dispositif élastique 174 agissant entre le patin et l'embase de fixation 173. Dans cette position neutre, par exemple lorsque la remorque est à l'arrêt en position dite accrochée au véhicule tracteur sur une surface horizontale plane, la surface active plane 171 est parallèle au plan longitudinal vertical P1 du véhicule tracteur. Tel qu'illustré à la figure 8, la surface active plane, dite inclinable, de chaque patin lié au véhicule peut ainsi accompagner la surface active plane fixe de chaque paroi de guidage 5 liée à la remorque pendant leur inclinaison relative, due au roulis relatif des véhicules, mais sans que cesse ni leur action de guidage latéral de la remorque par rapport au véhicule tracteur, ni leur liberté de glissement relatif vertical due aux mouvements relatifs des suspensions, ni leur liberté de glissement longitudinal due aux mouvements du timon coulissant pendant les phases de freinage.

Dans une variante de réalisation illustrée aux figures 9 et 10, les premiers éléments de guidage 207 du dispositif de guidage comprennent chacun un patin 270 monté inclinable via une liaison rotule 272 sur une embase de fixation 273 par laquelle ledit patin est fixé sur le châssis du véhicule tracteur. Le patin présente une surface active de contact 271 plane dotée, en bordure d'un chanfrein 277 facilitant l'engagement du second élément de guidage lors de la manoeuvre d'accrochage de la remorque au véhicule. Le patin est sollicité élastiquement vers une position neutre sous l'action d'un dispositif élastique 274 intercalé entre le patin et son embase de fixation.

Dans une variante de réalisation illustrée aux figures 11 et 12, les premiers éléments de guidage 307 du dispositif de guidage comprennent des parois ou patins 370, ayant des surfaces actives en forme de portion de cylindre 371 de rayon de courbure r1 et munies au niveau de leur bordure arrière d'un chanfrein 377. Comme précédemment, les patins sont montés, via leur embase 373, sur les longerons, en arrière de l'essieu arrière du véhicule tracteur et sensiblement à la hauteur des longerons. Pour assurer un contact permanent entre les surfaces actives fixes de forme cylindrique 371 dites en portion de cylindre et les surfaces actives latérales 51 des parois de guidage 5 pendant les mouvements relatifs de roulis du véhicule et de la remorque, le rayon de courbure r1 de la surface active fixe cylindrique est sensiblement égal à la moitié du segment reliant le centre des surfaces actives latérales de la remorque mesurée horizontalement et perpendiculaire au plan longitudinal vertical P1, comme illustré à la figure 12. L'axe de roulis relatif instantané de la remorque par rapport à son véhicule tracteur est incliné longitudinalement. Il passe, d'une part, par le point d'accrochage situé à l'avant de la remorque et, du fait de la présence des moyens de guidage, par le centre du segment reliant le centre des surfaces actives latérales de la remorque et perpendiculaire au plan longitudinal vertical P1. Le libre roulis de la remorque par rapport au véhicule tracteur est ainsi assuré en maintenant le contact sensiblement permanent d'une génératrice de la surface active fixe cylindrique 371 du patin 307 avec la surface active latérale 51 d'une paroi de guidage.

La longueur des patins à surface active fixe cylindrique, mesurée horizontalement, est dimensionnée comme précédemment dans le cas d'une surface plane. Leur hauteur, mesurée verticalement, est égale à la corde de l'arc correspondant à la course du point de contact de la surface active fixe cylindrique 371 du patin avec la surface active 51 de la paroi de guidage lors des mouvements de roulis d'amplitude maximale.

Selon des variantes de réalisation, afin de limiter le phénomène d'usure qui affecte les surfaces actives du dispositif de guidage lorsqu'elles agissent par glissement de l'une sur l'autre, le dispositif de guidage comprend des surfaces cylindriques rotatives solidaires soit du châssis du véhicule tracteur et/ou du châssis de la remorque et/ou d'une pièce mobile intermédiaire liée soit au châssis du véhicule tracteur soit au châssis de la remorque. Ces surfaces actives cylindriques mobiles en rotation peuvent judicieusement être réalisées sous la forme de rouleaux ou de galets dont les axes sont horizontaux et/ou verticaux selon que l'on souhaite privilégier la limitation de l'usure due aux mouvements de suspension verticaux et/ou aux mouvements de freinage horizontaux.

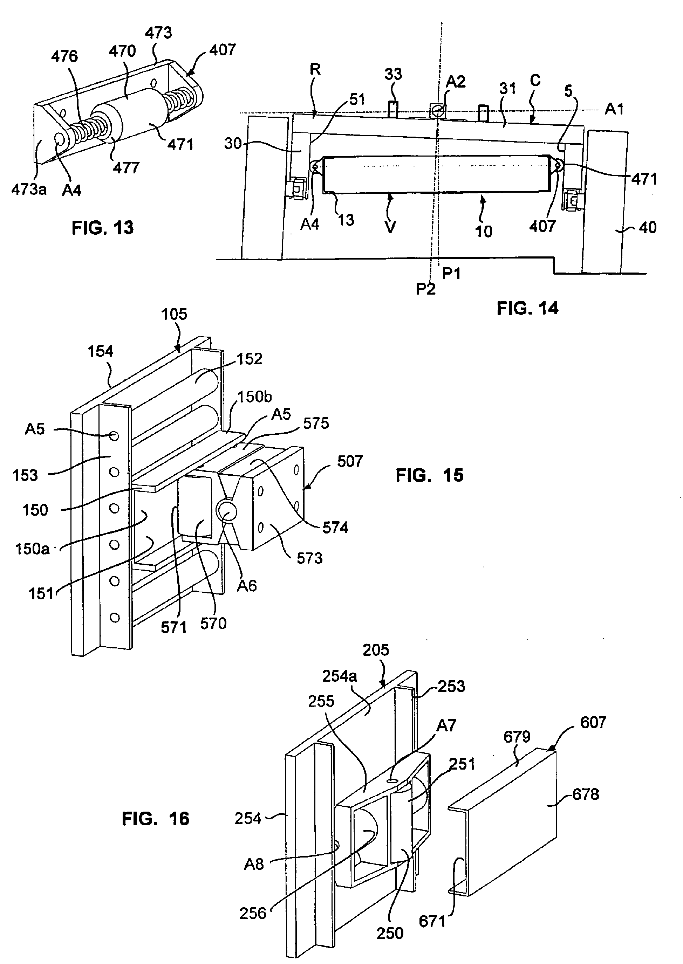

Dans une variante de réalisation illustrée aux figures 13 et 14, chaque premier élément de guidage 407 comprend un rouleau ou galet cylindrique 470 monté libre en rotation et coulissant sur un axe A4 qui est assemblé entre les deux pattes 473a d'une embase 473. Deux ressorts de rappel 476 montés sur l'axe A4 de part et d'autre du rouleau sollicitent élastiquement le rouleau dans une position neutre illustrée à la figure 13. L'embase est fixée sur le flanc des longerons 13 du véhicule tracteur, au niveau de la partie arrière dudit châssis, de sorte que ledit axe A4 soit disposé sensiblement horizontalement, parallèlement au plan longitudinal vertical P1. Le premier élément de guidage présente ainsi une surface active cylindrique mobile en rotation autour d'un axe horizontal et mobile en translation horizontale. Dans la position accrochée de la remorque, les rouleaux sont sensiblement en contact par leur surface active cylindrique 471 avec les surfaces active 51 des parois de guidage verticales. Lors de la conduite sur route (Fig.14), les mouvements de roulis ou de suspension provoquent la rotation du rouleau autour de son axe et le coulissement de la remorque au freinage provoque le coulissement du rouleau sur son axe. Le premier élément de guidage n'agissant plus par glissement, comme les patins précités, les parois de guidage du châssis de la remorque sont préservées du phénomène d'usure, et peuvent être constituées d'un acier dur, sans traitement particulier. Lors de l'accrochage de la remorque au véhicule tracteur, pour faciliter l'engagement des premiers éléments de guidage, constitués ici de rouleaux, entre les seconds moyens de guidage constitués ici de parois, la partie d'extrémité arrière 477 des rouleaux peut être judicieusement de forme conique et le bord vertical avant des parois de guidage peut être chanfreiné. En variante non représentée, l'embase 473 est montée sur les longerons du véhicule tracteur de sorte que l'axe A4 soit disposé sensiblement verticalement, parallèlement au plan longitudinal vertical P1. Dans ce cas, l'embase 473 est fixée de préférence sur un dispositif basculant à axe horizontal équipé d'un dispositif élastique similaire à celui décrit aux figures 7 et 15. Le premier élément de guidage présente ainsi une surface active cylindrique mobile en rotation autour d'un axe vertical et mobile en translation verticale. Les mouvements de roulis ou de suspension provoquent alors le coulissement du rouleau, et le coulissement de la remorque au freinage provoque la rotation du rouleau. Le mouvement de roulis provoque également l'inclinaison de l'axe du rouleau par rapport au châssis ce qui permet le maintien en contact permanent des surfaces actives. La surface active cylindrique mobile en rotation autour d'un premier axe est ainsi inclinable autour d'un second axe perpendiculaire au premier axe.

En variante, non représentée, de ce mode de réalisation, les seconds éléments de guidage sont constitués de chaque côté d'au moins un rouleau dont l'axe de rotation, fixé verticalement par ses extrémités dans une chape elle-même fixée à la paroi 30, est perpendiculaire au rouleau d'un premier élément. La surface de contact des surfaces actives étant réduite à un point situé à l'intersection des génératrices des rouleaux cylindriques perpendiculaires en appui l'un contre l'autre, ceux-ci pourront être avantageusement revêtus d'un matériau souple mais résistant permettant de réduire la pression de contact par augmentation de la surface en appui. Les rouleaux des premiers et seconds éléments peuvent être montés rotatifs dans leur chapes respectives et non coulissant longitudinalement sur leur axe. Les extrémités arrière des rouleaux du premier élément sont avantageusement réalisés coniques afin de faciliter leur engagement entre les rouleaux verticaux du second élément. La longueur des rouleaux horizontaux des premiers éléments de guidage est au moins égale à la course de coulissement du timon d'attelage. La longueur des rouleaux verticaux des seconds éléments de guidage est au moins égale à la course verticale de débattement relatif des suspensions de la remorque par rapport à celles du véhicule tracteur.

Dans une variante de réalisation illustrée à la figure 15, les premiers éléments de guidage 507 comprennent chacun deux rouleaux 570 montés rotatifs sur un support 575 autour de deux axes de rotation A5 parallèles entre eux, ledit support étant monté pivotant sur une embase 573 autour d'un axe A6 disposé perpendiculairement aux axes de rotation A5. Un dispositif élastique 574 est intercalé entre le support et l'embase pour solliciter élastiquement le support dans une position neutre illustrée à la figure 15. Les premiers éléments de guidage 507, positionnés sur le châssis du véhicule tracteur tel que décrit précédemment, sont fixés par leur embase 573 de sorte que l'axe de pivotement A6 soit disposé sensiblement parallèle à l'axe de roulis A12 de la remorque, parallèlement au plan longitudinal vertical P1, avec les axes de rotation des galets disposés sensiblement verticalement, parallèlement au plan longitudinal vertical P1 dans la position neutre du support précitée.

Les seconds éléments de guidage du châssis de la remorque comprennent chacun un ensemble de rouleaux 152 montés rotatifs entre deux ailes 153 parallèles solidaires d'une embase 154, et un rail ou profilé 150 en U comprenant une base 150a et deux ailes parallèles 150b. Le profilé 150 disposé perpendiculairement auxdites ailes 153 est apte à se déplacer en translation sur lesdits rouleaux 152, en étant en contact avec lesdits rouleaux par la surface extérieure de sa base, et en étant guidé en translation verticale par lesdites ailes 153 et prisonnier de ces dernières. Les embases 154 sont assemblées sur les parois verticales intérieures 30b des longerons support 30 du châssis de la remorque, de sorte que les axes A5 des rouleaux soient disposés horizontalement et sensiblement alignés les uns au dessus des autres dans un plan vertical.

Dans la position accrochée de la remorque, les rouleaux 570 d'un premier élément de guidage viennent sensiblement en contact par leur surface périphérique contre la surface intérieure 151 de la base 150a du profilé 150 en U d'un second élément et positionné coulissant verticalement sur ses rouleaux 152 ; le support 575, ou les rouleaux 570, étant guidé horizontalement entre les deux branches 150b du profilé 150 en U. La surface intérieure 151 de la base du profilé du second élément forme ainsi une surface active plane mobile en translation verticale. La surface périphérique 571 des rouleaux du second élément forme une surface active cylindrique mobile en rotation autour d'un axe vertical A5 et inclinable autour d'un axe horizontal A6.

Dans une variante de réalisation illustrée à la figure 16, les premiers éléments de guidage comprennent un rail ou profilé 607 en U, comprenant une base 678 et deux ailes 679 parallèles. Chaque profilé est fixé par sa base sur le châssis du véhicule de sorte que les ailes soient positionnées sensiblement horizontalement, la surface intérieure 671 du profilé disposée entre les deux ailes constitue une surface active plane verticale fixe du premier élément de guidage. Les seconds éléments de guidage 205 comprennent un chariot support 255 sur lequel sont montés en rotation un rouleau central 250 autour d'un axe A7 et deux rouleaux latéraux 256 autour d'axes A8 alignés, ces derniers étant perpendiculaires à l'axe A7 du rouleau central, et une embase 254 formée d'une plaque portant, sur une surface 254a, deux ailes 253 parallèles. Le support est apte à se déplacer en translation sur la surface 254a de l'embase portant les ailes 253, en étant en contact contre ladite surface uniquement par ses rouleaux latéraux, et en étant guidé en translation verticale par ces ailes 253, les axes des rouleaux latéraux étant perpendiculaires à ces dernières. Les embases 254 sont fixées sur les parois verticales intérieures 30b des longerons support 30 du châssis de la remorque, de sorte que la plaque 254 et les ailes 253 soient disposées sensiblement verticalement.

Dans la position accrochée de la remorque, le rouleau central 250 d'un second élément de guidage, dont le support est en contact par ses rouleaux latéraux contre la surface 254a de l'embase, vient sensiblement en contact par sa surface périphérique 251 contre la surface intérieure 671 de la base 607 du profilé d'un premier élément de guidage, le support 255 ou le rouleau 250 étant guidé entre les deux branches 679 du profilé. Le support 255, prisonnier par son axe des ailes 253 de l'embase 254, peut basculer librement selon un axe horizontal correspondant aux génératrices des rouleaux 256 en contact avec la surface 254a de l'embase. Ce basculement d'amplitude modérée du chariot support 255 permet au rouleau 251 d'accompagner l'inclinaison de la surface active 671 du rail 607 pendant les mouvements de roulis de la remorque par rapport au véhicule tracteur.

La surface plane fixe intérieure du rail 607 forme ainsi la surface active plane fixe du premier élément de guidage. La surface périphérique 251 du rouleau central forme la surface active cylindrique mobile en rotation autour d'un axe vertical, mobile en translation verticale et inclinable autour d'un axe horizontal du second élément de guidage.

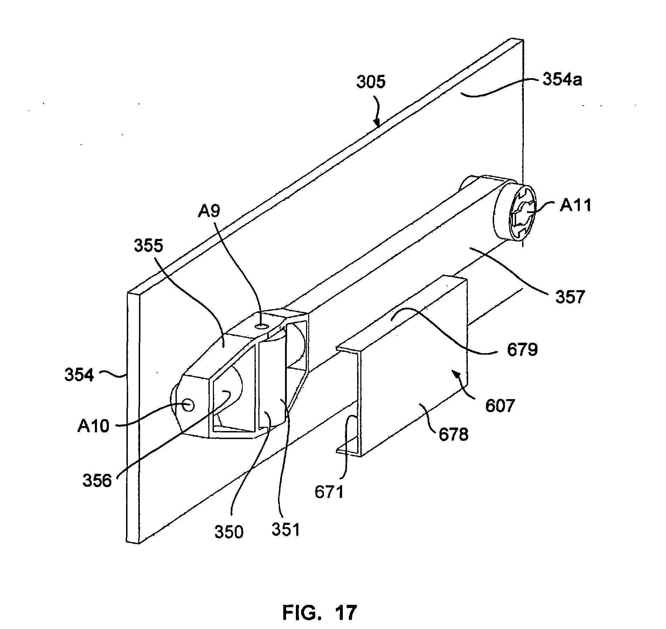

Dans une variante illustrée à la figure 17, les premiers éléments de guidage comprennent comme précédemment un rail ou profilé 607 en U, comprenant une base 678 et deux ailes 679 parallèles, la surface intérieure 671 du profilé constituant une surface active plane fixe du premier élément de guidage. Les seconds éléments de guidage 305 comprennent comme précédemment un support 355 sur lequel sont montés en rotation un rouleau central 350 autour d'un axe A9 et deux rouleaux latéraux 356 autour d'axes A10, une embase 354 formée d'une plaque, et un bras mobile 357 monté pivotant par une extrémité avant ou arrière autour d'un axe horizontal A11 transversal fixé à l'embase. Le bras mobile s'étend parallèlement à la surface 354a de l'embase et porte à son autre extrémité ledit support, de sorte que ce dernier soit en contact contre ladite surface uniquement par ses rouleaux latéraux. Les embases 354 sont fixées sur les parois verticales intérieures 30b des longerons support 30 du châssis de la remorque, de sorte la plaque 354 soit disposée sensiblement verticalement. Le support est maintenu suspendu, dans une position neutre dans laquelle l'axe A9 est disposé sensiblement verticalement, via un dispositif élastique intégré au niveau du moyeu A11 du bras mobile. Dans la position accrochée de la remorque, le rouleau central 350 d'un second élément de guidage vient sensiblement en contact par sa surface périphérique 351 contre la surface intérieure 671 de la base 607 du profilé d'un premier élément de guidage. Lors du débattement des suspensions, le support mobile 355 se déplace selon un arc de cercle contre la surface 354a de l'embase. La surface 351 du rouleau 350 constitue une surface active mobile en rotation autour d'un axe A9 et pivotante autour d'un axe de pivotement A11. L'avantage de ce mode de réalisation est sa simplicité de réalisation et sa plus grande résistance aux chocs.

Pour faciliter l'engagement des premiers éléments de guidage entre les seconds éléments de guidage, les bords arrière des premiers éléments de guidage sont tous chanfreinés lorsque leur surface est autre que cylindrique à axe vertical.

Pour faciliter l'engagement de l'arrière du véhicule tracteur entre les seconds éléments de guidage de la remorque à guidage axial, par exemple des parois de guidage, et compte tenu du faible jeu latéral résiduel, un dispositif de centrage est avantageusement prévu. Ledit dispositif de centrage comprenant deux premiers éléments de centrage fixés au châssis du véhicule tracteur juste en arrière des premiers éléments de guidage, et à la même hauteur que ces derniers, et deux seconds éléments de centrage fixés au châssis de la remorque juste en avant des premiers éléments de guidage, et à la même hauteur que ces derniers. Ces premiers de centrage peuvent être, par exemple, constitués d'un galet à axe vertical fixé au châssis et ces seconds éléments de guidage par une tôle plane verticale inclinée latéralement vers l'extérieur ou réciproquement. L'action de ces éléments de centrage complémentaires facilite l'engagement de l'arrière du véhicule tracteur sous la remorque jusqu'à son accrochage qui s'effectue de façon automatique.

Bien que l'invention ait été décrite en liaison avec différents modes de réalisation de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention telle que revendiquée.

## Revendications

1. Ensemble routier comprenant
- un véhicule tracteur (V) comprenant un châssis (10) sur lequel sont montés au moins un essieu avant portant des roues avant et un essieu arrière portant des roues arrière (11),
- une remorque (R) comprenant un châssis (C) sur lequel sont montées au moins deux roues (40),
- un dispositif d'attelage comprenant des moyens d'accrochage (21) montés sur le châssis du véhicule tracteur, en avant de l'essieu arrière, aptes à coopérer avec des moyens d'accrochage (83) complémentaires de la remorque pour accrocher la remorque au véhicule tracteur dans une position dite accrochée de la remorque, de sorte que la remorque soit articulée sur le véhicule tracteur au moins autour d'un axe transversal de tangage (A1) sensiblement horizontal situé en avant de l'essieu arrière du véhicule tracteur, et,
- un dispositif dit de guidage axial, comprenant des premiers moyens de guidage montés sur le véhicule tracteur aptes à coopérer dans la position accrochée de la remorque avec des seconds moyens de guidage montés sur la remorque, pour maintenir l'axe longitudinal médian (A2) de la remorque sensiblement dans le plan longitudinal vertical du véhicule tracteur,
**caractérisé en ce que**
- la remorque comprend au moins un timon coulissant (8) à freinage par inertie, ledit timon coulissant comportant une partie fixe (81) montée de manière fixe à l'avant du châssis (C) et une partie mobile (82) montée dans la partie fixe de manière coulissante, et munie à son extrémité libre avant desdits moyens d'accrochage (83) complémentaires,
- lesdits premiers moyens de guidage comprenant deux premiers éléments de guidage (7, 107, 207, 307, 407, 507, 607) montés symétriquement sur le châssis (10) du véhicule tracteur, de part et d'autre de son plan longitudinal vertical (P1), en arrière de son essieu arrière et de chaque côté extérieur dudit châssis,
- lesdits seconds moyens de guidage comprenant deux seconds éléments de guidage (5, 105, 205, 305), montés symétriquement sur le châssis de la remorque, de part et d'autre de son plan longitudinal vertical et en vis-à-vis,
- chaque second élément de guidage étant apte à venir sensiblement en contact par une surface active de contact (51, 151, 251, 351) avec une surface active de contact (71, 171, 271, 371, 471, 571, 671) d'un premier élément de guidage dans un plan de contact sensiblement vertical qui est extérieur au châssis du véhicule tracteur et intérieur au châssis de la remorque.

2. Ensemble routier selon la revendication 1, **caractérisé en ce que**, dans la position accrochée de la remorque, lesdits premiers moyens de guidage (7, 107, 207, 307, 407, 507, 607) et lesdits seconds moyens de guidage (5, 105, 205, 305) sont disposés sensiblement au niveau des axes des roues (40) de la remorque (R).

3. Ensemble routier selon la revendication 1 ou 2, **caractérisé en ce que** le châssis (10) du véhicule tracteur (R) comprend deux longerons (13) sur lesquels sont montés l'essieu arrière portant des roues arrière (11), lesdits longerons présentant des parties arrière (10a) s'étendant en arrière des roues arrière, sur le côté extérieur desquelles sont disposés lesdits premiers éléments de guidage (7, 107, 207, 307, 407, 507, 607), lesdits premiers et seconds éléments de guidage étant disposés sensiblement à hauteur des parties arrière des longerons du châssis du véhicule tracteur dans la position accrochée de la remorque.

4. Ensemble routier selon l'une des revendications 1 à 3, **caractérisé en ce que** chaque premier élément de guidage (7, 107, 207, 307, 407, 507, 607) et chaque second élément de guidage (5, 105, 205, 305) présente au moins une surface active sensiblement plane (71, 171, 271, 671 ; 51, 151) ou cylindrique (371, 471, 571 ; 251, 351), fixe (71, 371, 671 ; 51) ou mobile (171, 271, 471, 571 ; 151, 251, 351) par rapport au châssis sur lequel l'élément est monté.

5. Ensemble routier selon la revendication 4, **caractérisé en ce que** lesdits premiers éléments de guidage et lesdits seconds éléments de guidage présentent chacun au moins une surface active de contact choisie parmi
- une surface active plane fixe (71, 671 ; 51),
- une surface active plane qui est
- mobile dans son plan (151), en translation verticale et/ou horizontale, sensiblement parallèlement aux plans longitudinaux verticaux de la remorque et du véhicule tracteur, et/ou
- inclinable (171) autour d'un axe de pivotement (A3) sensiblement parallèle à l'axe de roulis (A12) de la remorque et du véhicule tracteur, ou inclinable (271) autour d'un point par l'action d'une liaison de type rotule (272), et/ou
- pivotante autour d'un axe de pivotement sensiblement perpendiculaire aux plans longitudinaux verticaux de la remorque et du véhicule tracteur,
- une surface active cylindrique fixe (371),
- une surface active cylindrique mobile en rotation autour d'un axe sensiblement vertical ou horizontal, sensiblement parallèle aux plans longitudinaux verticaux de la remorque et du véhicule tracteur, et
- une surface active cylindrique mobile en rotation autour d'un premier axe sensiblement vertical (A5, A7, A9) ou horizontal (A4), sensiblement parallèle aux plans longitudinaux verticaux de la remorque et du véhicule tracteur, et qui est
- mobile en translation sensiblement horizontale (471) ou verticale (251), et sensiblement parallèlement aux plans longitudinaux verticaux de la remorque et du véhicule tracteur, et/ou
- inclinable (571) autour d'un second axe (A6) perpendiculaire au premier axe et parallèle à l'axe de roulis (A12) de la remorque par rapport au véhicule tracteur, et/ou
- pivotante (351) autour d'un troisième axe (A11) de pivotement sensiblement perpendiculaire aux plans longitudinaux verticaux de la remorque et du véhicule tracteur.

6. Ensemble routier selon l'une des revendications 1 à 5, **caractérisé en ce que** le châssis (10) de la remorque (R) comprend deux longerons supports latéraux (30) munis, de leur côté intérieur et en vis-à-vis, desdits seconds éléments de guidage (5, 105, 205, 305).

7. Ensemble routier selon l'une des revendications 1 à 6, **caractérisé en ce que** des premiers objets parmi lesdits premiers et seconds éléments de guidage (607; 5) comprennent des parois (678, 30b) sensiblement verticales présentant des surfaces actives planes fixes (671 ; 51), les autres objets (7, 107, 207) comprenant chacun au moins un patin (70, 170, 270), dont la surface active (71, 171, 271) est sensiblement verticale.

8. Ensemble routier selon la revendication 7, **caractérisé en ce que** lesdits patins (170, 270) sont montés sur le châssis de la remorque ou le châssis du véhicule tracteur inclinables autour d'un axe de pivotement (A3) parallèle à l'axe de roulis de la remorque, ou autour d'un point par l'intermédiaire d'une liaison rotule (272).

9. Ensemble routier selon les revendications 1 à 6, **caractérisé en ce que** des premiers objets parmi lesdits premiers et seconds éléments de guidage (607 ; 5, 105) comprennent des parois (678, 30b, 150a) sensiblement verticales présentant des surfaces actives planes (671 ; 51, 151), les autres objets (407, 507, 205, 305) comprenant chacun au moins un galet (470, 570, 250, 350) dont l'axe de rotation (A4, A5, A7, A9) est disposé soit horizontalement soit verticalement, sensiblement parallèlement aux plans longitudinaux verticaux de la remorque et du véhicule tracteur.

10. Ensemble routier selon la revendication 9, **caractérisé en ce que**
- chaque galet rotatif autour de son axe de symétrie est monté sur le châssis de la remorque ou sur le châssis du véhicule mobile en translation verticale (250) et/ou horizontale (470), et/ou inclinable (570) autour d'un axe de pivotement perpendiculaire à son axe de rotation et/ou pivotant (350) autour d'un axe perpendiculaire aux plans longitudinaux verticaux de la remorque et du véhicule tracteur,
- et/ou lesdites parois verticales sont montées mobiles en translation verticale (150a) et/ou horizontale et/ou pivotantes autour d'un axe perpendiculaire aux plans longitudinaux verticaux de la remorque et du véhicule tracteur.

11. Ensemble routier selon la revendication 8 ou 10, **caractérisé en ce que** lesdits premiers éléments de guidage (171, 271, 471, 571) et/ou lesdits seconds éléments de guidage (305) montés inclinables, mobiles en translation verticale et/ou horizontale et/ou pivotantes sont sollicités élastiquement vers une position neutre par des dispositifs élastiques (174, 274, 476, 574, A11).

12. Ensemble routier selon l'une des revendication 1 à 11, **caractérisé en ce que** ledit châssis (C) de la remorque (R) comprend une partie dite centrale (C1) portant de chaque côté un support de roue vertical (30), chaque support de roue vertical portant latéralement, du côté extérieur, de manière rotative, au moins une roue (40), ladite partie centrale étant disposée dans la position accrochée de la remorque au-dessus du châssis (10) du véhicule tracteur (V), avec chaque support de roue vertical disposé du côté extérieur du châssis du véhicule tracteur, juste en arrière d'une roue (11) de son essieu arrière.

13. Ensemble routier selon la revendication 12, **caractérisé en ce que** ladite partie centrale (C1) du châssis est formée d'au moins une traverse dite avant (31) et des deux supports de roue verticaux (30) montés aux extrémités de ladite traverse avant, la traverse avant étant disposée dans la position accrochée de la remorque au-dessus du châssis du véhicule tracteur.

14. Ensemble routier selon les revendications 6 et 13, **caractérisé en ce que** lesdits supports de roue verticaux sont formés lesdits longerons supports latéraux (30) présentant sur leur côté intérieur lesdits seconds éléments de guidage (5, 105, 205, 305).

15. Ensemble routier selon la revendication 13 ou 14, **caractérisé en ce que** chaque roue (40) est montée sur un support de roue vertical (30) au moyen d'un bras oscillant (41), monté pivotant en partie inférieure du support de roue vertical autour d'un axe de pivotement transversal.

## Claims

1. Vehicle combination comprising
- a tractor vehicle (V) comprising a chassis (10) on which there are mounted at least one front axle carrying front wheels and a rear axle carrying rear wheels (11),
- a trailer (R) comprising a chassis (C) on which there are mounted at least two wheels (40),
- a hitch device comprising coupling means (21) which are mounted on the chassis of the tractor vehicle, in front of the rear axle, and are able to engage with complementary coupling means (83) on the trailer in order to couple the trailer to the tractor vehicle in a coupled position of the trailer, such that the trailer is articulated to the tractor vehicle at least about an approximately horizontal transverse pitch axis (A1) located in front of the rear axle of the tractor vehicle, and
- an axial guide device, comprising first guide means that are mounted on the tractor vehicle and are able to engage, in the coupled position of the trailer, with second guide means mounted on the trailer, in order to keep the longitudinal mid-axis (A2) of the trailer approximately in the vertical longitudinal plane of the tractor vehicle,
**characterized in that**
- the trailer comprises at least one sliding tow bar (8) having inertia braking, said sliding tow bar having a fixed part (81), which is mounted in a fixed manner at the front of the chassis (C), and a moving part (82), which is mounted in the fixed part such that it can slide, and is provided at its front free end with said complementary coupling means (83),
- said first guide means comprising two first guide elements (7, 107, 207, 307, 407, 507, 607), which are mounted symmetrically on the chassis (10) of the tractor vehicle, on either side of its vertical longitudinal plane (P1), behind its rear axle and on each outer side of said chassis,
- said second guide means comprising two second guide elements (5, 105, 205, 305), which are mounted symmetrically on the chassis of the trailer, on either side of its vertical longitudinal plane and opposite one another,
- each second guide element being able to come substantially into contact, by way of an active contact surface (51, 151, 251, 351), with an active contact surface (71, 171, 271, 371, 471, 571, 671) of a first guide element in an approximately vertical contact plane which is outside the chassis of the tractor vehicle and inside the chassis of the trailer.

2. Vehicle combination according to Claim 1, **characterized in that**, in the coupled position of the trailer, said first guide means (7, 107, 207, 307, 407, 507, 607) and said second guide means (5, 105, 205, 305) are disposed approximately at the level of the axes of the wheels (40) of the trailer (R).

3. Vehicle combination according to Claim 1 or 2, **characterized in that** the chassis (10) of the tractor vehicle (R) comprises two side members (13) on which there is mounted the rear axle carrying rear wheels (11), said side members having rear parts (10a) that extend behind the rear wheels, on the outer side of which are located said first guide elements (7, 107, 207, 307, 407, 507, 607), said first and second guide elements being disposed approximately at the height of the rear parts of the side members of the chassis of the tractor vehicle in the coupled position of the trailer.

4. Vehicle combination according to one of Claims 1 to 3, **characterized in that** each first guide element (7, 107, 207, 307, 407, 507, 607) and each second guide element (5, 105, 205, 305) has at least one substantially planar active surface (71, 171, 271, 671; 51, 151) or cylindrical active surface (371, 471, 571; 251, 351), which is fixed (71, 371, 671; 51) or able to move (171, 271, 471, 571; 151, 251, 351) with respect to the chassis on which the element is mounted.

5. Vehicle combination according to Claim 4, **characterized in that** said first guide elements and said second guide elements each have at least one active contact surface selected from
- a fixed planar active surface (71, 671; 51),
- a planar active surface, which is
- able to move in its plane (151), in vertical and/or horizontal translation, approximately parallel to the vertical longitudinal planes of the trailer and of the tractor vehicle, and/or
- inclinable (171) about a pivot axis (A3) approximately parallel to the roll axis (A12) of the trailer and of the tractor vehicle, or inclinable (271) about a point by the action of a connection (272) of the ball-joint type, and/or
- pivotable about a pivot axis approximately perpendicular to the vertical longitudinal planes of the trailer and of the tractor vehicle,
- a fixed cylindrical active surface (371),
- a cylindrical active surface that is able to rotate about an approximately vertical or horizontal axis, approximately parallel to the vertical longitudinal planes of the trailer and of the tractor vehicle, and
- a cylindrical active surface that is able to rotate about a first approximately vertical axis (A5, A7, A9) or approximately horizontal axis (A4), approximately parallel to the vertical longitudinal planes of the trailer and of the tractor vehicle, and which is
- able to undergo translational movement approximately horizontally (471) or vertically (251), and approximately parallel to the vertical longitudinal planes of the trailer and of the tractor vehicle, and/or
- inclinable (571) about a second axis (A6) perpendicular to the first axis and parallel to the roll axis (A12) of the trailer with respect to the tractor vehicle, and/or
- pivotable (351) about a third pivot axis (A11) approximately perpendicular to the vertical longitudinal planes of the trailer and of the tractor vehicle.

6. Vehicle combination according to one of Claims 1 to 5, **characterized in that** the chassis (10) of the trailer (R) comprises two lateral supporting side members (30) which are provided, on their inner side and opposite one another, with said second guide elements (5, 105, 205, 305).

7. Vehicle combination according to one of Claims 1 to 6, **characterized in that** first objects selected from said first and second guide elements (607; 5) comprise approximately vertical walls (678, 30b) that have fixed planar active surfaces (671; 51), the other objects (7, 107, 207) comprising in each case at least one pad (70, 170, 270), the active surface (71, 171, 271) of which is approximately vertical.

8. Vehicle combination according to Claim 7, **characterized in that** said pads (170, 270) are mounted on the chassis of the trailer or the chassis of the tractor vehicle in an inclinable manner about a pivot axis (A3) parallel to the roll axis of the trailer, or about a point by way of a ball-joint connection (272).

9. Vehicle combination according to Claims 1 to 6, **characterized in that** first objects selected from said first and second guide elements (607; 5, 105) comprise approximately vertical walls (678, 30b, 150a) having planar active surfaces (671; 51, 151), the other objects (407, 507, 205, 305) comprising in each case at least one roller (470, 570, 250, 350), the rotation axis (A4, A5, A7, A9) of which is disposed either horizontally or vertically, approximately parallel to the vertical longitudinal planes of the trailer and of the tractor vehicle.

10. Vehicle combination according to Claim 9, **characterized in that**
- each roller which is rotatable about its axis of symmetry is mounted on the chassis of the trailer or on the chassis of the vehicle such that it can undergo translational movement vertically (250) and/or horizontally (450), and/or is inclinable (570) about a pivot axis perpendicular to its rotation axis, and/or is pivotable (350) about an axis perpendicular to the vertical longitudinal planes of the trailer and of the tractor vehicle,
- and/or said vertical walls are mounted such that they can undergo translational movement vertically (150a) and/or horizontally, and/or are pivotable about an axis perpendicular to the vertical longitudinal planes of the trailer and of the tractor vehicle.

11. Vehicle combination according to Claim 8 or 10, **characterized in that** said first guide elements (171, 271, 471, 571) and/or said second guide elements (305) that are mounted such as to be inclinable, able to undergo translational movement vertically and/or horizontally, and/or pivotable are elastically urged towards a neutral position by elastic means (174, 274, 476, 574, All).

12. Vehicle combination according to one of Claims 1 to 11, **characterized in that** said chassis (C) of the trailer (R) comprises a part, called the central part (C1), that carries on each side a vertical wheel support (30), each vertical wheel support carrying at least one wheel (40) laterally, on the outer side, in a rotational manner, said central part being disposed above the chassis (10) of the tractor vehicle (V) in the coupled position of the trailer, with each vertical wheel support being disposed on the outer side of the chassis of the tractor vehicle, just behind a wheel (11) on its rear axle.

13. Vehicle combination according to Claim 12, **characterized in that** said central part (C1) of the chassis is formed of at least one cross member, called the front cross member (31), and of two vertical wheel supports (30) that are mounted at the ends of said front cross member, the front cross member being disposed above the chassis of the tractor vehicle in the coupled position of the trailer.

14. Vehicle combination according to Claims 6 and 13, **characterized in that** said vertical wheel supports are formed of said lateral supporting side members (30) having said second guide elements (5, 105, 205, 305) on their inner side.

15. Vehicle combination according to Claim 13 or 14, **characterized in that** each wheel (40) is mounted on a vertical wheel support (30) by means of a rocker arm (41) that is mounted in a pivotable manner in the lower part of the vertical wheel support about a transverse pivot axis.

## Patentansprüche

1. Lastzug, der enthält
- ein Zugfahrzeug (V) mit einem Fahrgestell (10), auf das mindestens eine Vorderräder tragende Vorderachse und eine Hinterräder (11) tragende Hinterachse montiert sind,
- einen Anhänger (R) mit einem Fahrgestell (C), auf das mindestens zwei Räder (40) montiert sind,
- eine Kuppelvorrichtung, die auf das Fahrgestell des Zugfahrzeugs vor der Hinterachse montierte Ankopplungseinrichtungen (21) enthält, die mit komplementären Ankopplungseinrichtungen (83) des Anhängers zusammenwirken können, um den Anhänger in einer so genannten angekoppelten Stellung des Anhängers so an das Zugfahrzeug anzukoppeln, dass der Anhänger mindestens um eine im Wesentlichen waagrechte Nickachse (A1) an das Zugfahrzeug angelenkt ist, die sich vor der Hinterachse des Zugfahrzeugs befindet, und
- eine so genannte axiale Führungsvorrichtung, die erste auf das Zugfahrzeug montierte Führungseinrichtungen enthält, die in der angekoppelten Stellung des Anhängers mit auf den Anhänger montierten zweiten Führungseinrichtungen zusammenwirken können, um die mittlere Längsachse (A2) des Anhängers im Wesentlichen in der senkrechten Längsebene des Zugfahrzeugs zu halten,
**dadurch gekennzeichnet, dass**
- der Anhänger mindestens eine gleitende Deichsel (8) mit Trägheitsbremsung enthält, wobei die gleitende Deichsel einen ortsfesten Teil (81), der ortsfest vor dem Fahrgestell (C) montiert ist, und einen beweglichen Teil (82) aufweist, der gleitend in den ortsfesten Teil montiert und an seinem freien vorderen Ende mit den komplementären Ankopplungseinrichtungen (83) versehen ist,
- wobei die ersten Führungseinrichtungen zwei erste Führungselemente (7, 107, 207, 307, 407, 507, 607) enthalten, die symmetrisch auf das Fahrgestell (10) des Zugfahrzeugs zu beiden Seiten seiner senkrechten Längsebene (P1) hinter seiner Hinterachse und auf jeder Außenseite des Fahrgestells montiert sind,
- wobei die zweiten Führungseinrichtungen zwei zweite Führungselemente (5, 105, 205, 305) enthalten, die symmetrisch auf das Fahrgestell des Anhängers zu beiden Seiten seiner senkrechten Längsebene und einander gegenüber montiert sind,
- wobei jedes zweite Führungselement durch eine aktive Kontaktfläche (51, 151, 251, 351) im Wesentlichen mit einer aktiven Kontaktfläche (71, 171, 271, 371, 471, 571, 671) eines ersten Führungselements in einer im Wesentlichen senkrechten Kontaktebene in Kontakt kommen kann, die außerhalb des Fahrgestells des Zugfahrzeugs und innerhalb des Fahrgestells des Anhängers liegt.

2. Lastzug nach Anspruch 1, **dadurch gekennzeichnet, dass** in der angekoppelten Stellung des Anhängers die ersten Führungseinrichtungen (7, 107, 207, 307, 407, 507, 607) und die zweiten Führungseinrichtungen (5, 105, 205, 305) im Wesentlichen im Bereich der Achsen der Räder (40) des Anhängers (R) angeordnet sind.

3. Lastzug nach Anspruch 1 oder 2, **dadurch gekennzeichnet, dass** das Fahrgestell (10) des Zugfahrzeugs (R) zwei Längsträger (13) enthält, auf die die Hinterräder (11) tragende Hinterachse montiert ist, wobei die Längsträger hintere Teile (10a) aufweisen, die sich hinter den Hinterrädern erstrecken, auf deren Außenseite die ersten Führungselemente (7, 107, 207, 307, 407, 507, 607) angeordnet sind, wobei die ersten und zweiten Führungselemente im Wesentlichen in Höhe der hinteren Teile der Längsträger des Fahrgestells des Zugfahrzeugs in der angekoppelten Stellung des Anhängers angeordnet sind.

4. Lastzug nach einem der Ansprüche 1 bis 3, **dadurch gekennzeichnet, dass** jedes erste Führungselement (7, 107, 207, 307, 407, 507, 607) und jedes zweite Führungselement (5, 105, 205, 305) mindestens eine im Wesentlichen ebene (71, 171, 271, 671; 51, 151) oder zylindrische (371, 471, 571; 251, 351), ortsfeste (71, 371, 671; 51) oder bezüglich des Fahrgestells, auf das das Elemente montiert ist, bewegliche (171, 271, 471, 571; 151, 251, 351) aktive Fläche aufweist.

5. Lastzug nach Anspruch 4, **dadurch gekennzeichnet, dass** die ersten Führungselemente und die zweiten Führungselemente je mindestens eine aktive Kontaktfläche aufweisen, die ausgewählt wird aus
- einer ortsfesten ebenen aktiven Fläche (71, 671; 51),
- einer ebenen aktiven Fläche, die
- in ihrer Ebene (151), in senkrechter und/oder waagrechter Translationsrichtung, im Wesentlichen parallel zu den senkrechten Längsebenen des Anhängers und des Zugfahrzeug beweglich ist, und/oder
- um eine Schwenkachse (A3) im Wesentlichen parallel zur Wankachse (A12) des Anhängers und des Zugfahrzeugs neigbar (171) ist, oder um einen Punkt durch die Wirkung einer Verbindung vom Typ Kugelgelenk (272) neigbar ist (271), und/oder
- um eine Schwenkachse im Wesentlichen lotrecht zu den senkrechten Längsebenen des Anhängers und des Zugfahrzeugs schwenkbar ist,
- einer ortsfesten zylindrischen aktiven Fläche (371),
- einer zylindrischen aktiven Fläche, die um eine im Wesentlichen senkrechte oder waagrechte Achse, im Wesentlichen parallel zu den senkrechten Längsebenen des Anhängers und des Zugfahrzeugs drehbeweglich ist, und
- einer zylindrischen aktiven Fläche, die um eine erste im Wesentlichen senkrechte (A5, A7, A9) oder waagrechte (A4) Achse, im Wesentlichen parallel zu den senkrechten Längsebenen des Anhängers und des Zugfahrzeugs drehbeweglich ist, und die
- in im Wesentlichen waagrechter (471) oder senkrechter (251) Translationsrichtung und im Wesentlichen parallel zu den senkrechten Längsebenen des Anhängers und des Zugfahrzeugs beweglich, und/oder
- um eine zweite Achse (A6) lotrecht zur ersten Achse und parallel zur Wankachse (A12) des Anhängers bezüglich des Zugfahrzeugs neigbar (571), und/oder
- um eine dritte Schwenkachse (A11) im Wesentlichen lotrecht zu den senkrechten Längebenen des Anhängers und des Zugfahrzeugs schwenkbar (351) ist.

6. Lastzug nach einem der Ansprüche 1 bis 5, **dadurch gekennzeichnet, dass** das Fahrgestell (10) des Anhängers (R) zwei seitliche Stütz-Längsträger (30) aufweist, die auf ihrer Innenseite und einander gegenüber mit den zweiten Führungselementen (5, 105, 205, 305) versehen sind.

7. Lastzug nach einem der Ansprüche 1 bis 6, **dadurch gekennzeichnet, dass** erste Gegenstände unter den ersten und zweiten Führungselementen (607; 5) im Wesentlichen senkrechte Wände (678, 30b) enthalten, die ortsfeste aktive Flächen (671; 51) aufweisen, während die anderen Gegenstände (7, 107, 207) je mindestens ein Gleitstück (70, 170, 270) enthalten, dessen aktive Fläche (71, 171, 271) im Wesentlichen senkrecht ist.

8. Lastzug nach Anspruch 7, **dadurch gekennzeichnet, dass** die Gleitstücke (170, 270) auf das Fahrgestell des Anhängers oder das Fahrgestell des Zugfahrzeugs um eine Schwenkachse (A3) parallel zur Wankachse des Anhängers, oder um einen Punkt mittels einer Kugelgelenkverbindung (272) neigbar montiert sind.

9. Lastzug nach einem der Ansprüche 1 bis 6, **dadurch gekennzeichnet, dass** erste Gegenstände unter den ersten und zweiten Führungselementen (607; 5, 105) im Wesentlichen senkrechte Wände (678, 30b, 150a) enthalten, die ebene aktive Flächen (671; 51, 151) aufweisen, während die anderen Gegenstände (407, 507, 205, 305) je mindestens eine Rolle (470, 570, 250, 350) enthalten, deren Drehachse (A4, A5, A7, A9) entweder waagrecht oder senkrecht im Wesentlichen parallel zu den senkrechten Längsebenen des Anhängers und des Zugfahrzeugs angeordnet ist.

10. Lastzug nach Anspruch 9, **dadurch gekennzeichnet, dass**
- jede um ihre Symmetrieachse drehbare Rolle auf das Fahrgestell des Anhängers oder auf das Fahrgestell des Fahrzeugs senkrecht (250) und/oder waagrecht (470) translationsbeweglich, und/oder um eine Schwenkachse lotrecht zu ihrer Drehachse neigbar (570) und/oder um eine Achse lotrecht zu den senkrechten Längsebenen des Anhängers und des Zugfahrzeugs schwenkbar (350) montiert ist,
- und/oder die senkrechten Wände senkrecht (150a) und/oder waagrecht translationsbeweglich und/oder um eine Achse lotrecht zu den senkrechten Längsebenen des Anhängers und des Zugfahrzeugs schwenkbar montiert sind.

11. Lastzug nach Anspruch 8 oder 10, **dadurch gekennzeichnet, dass** die neigbar, senkrecht und/oder waagrecht translationsbeweglich und/oder schwenkbar montierten ersten Führungselemente (171, 271, 471, 571) und/oder zweiten Führungselemente (305) von elastischen Vorrichtungen (174, 274, 476, 574, A11) elastisch in eine neutrale Stellung beansprucht werden.

12. Lastzug nach einem der Ansprüche 1 bis 11, **dadurch gekennzeichnet, dass** das Fahrgestell (C) des Anhängers (R) einen so genannten zentralen Teil (C1) enthält, der auf jeder Seite einen senkrechten Radhalter (30) trägt, wobei jeder senkrechte Radhalter auf der Außenseite drehbar mindestens ein Rad (40) trägt, wobei der zentrale Teil in der angekoppelten Stellung des Anhängers über dem Fahrgestell (10) des Zugfahrzeugs (V) angeordnet ist, wobei jeder senkrechte Radhalter auf der Außenseite des Fahrgestells des Zugfahrzeugs knapp hinter einem Rad (11) seiner Hinterachse angeordnet ist.

13. Lastzug nach Anspruch 12, **dadurch gekennzeichnet, dass** der zentrale Teil (C1) des Fahrgestells von mindestens einem so genannten vorderen Querträger (31) und von den zwei senkrechten Radhaltern (30), die an den Enden des vorderen Querträgers montiert sind, geformt wird, wobei der vordere Querträger in der angekoppelten Stellung des Anhängers über dem Fahrgestell des Zugfahrzeugs angeordnet ist.

14. Lastzug nach den Ansprüche 6 und 13, **dadurch gekennzeichnet, dass** die senkrechten Radhalter von den seitlichen Stütz-Längsträgern (30) geformt werden, die auf ihrer Innenseite die zweiten Führungselemente (5, 105, 205, 305) aufweisen.

15. Lastzug nach Anspruch 13 oder 14, **dadurch gekennzeichnet, dass** jedes Rad (40) auf einen senkrechten Radhalter (30) mittels eines Schwungarms (41) montiert ist, der im unteren Teil des senkrechten Radhalters um eine Querschwenkachse schwenkbar montiert ist.
